# EUROPÄISCHE PATENTSCHRIFT

(11) **EP 0 861 869 B1**
(45) Veröffentlichungstag und Bekanntmachung des Hinweises auf die Patenterteilung: **28.04.2004**
(21) Anmeldenummer: 98102267.6
(22) Anmeldetag: 10.02.1998
(51) Int. Cl.: C08J 7/04, C09J 177/08, B60C 13/00, B44C 1/17, C09D 177/08, C09J 5/02, C08G 69/34

(54) **Verbesserung der dauerhaften Verbundfestigkeit von Verklebungen auf Gummiartikeln**
Improvement in the permanent bond strength of adhesive joints on rubber articles
Amélioration de la résistance à l'arrachement de collages sur des articles en caoutchouc

(30) Priorität: 28.02.1997 DE 19708234
(43) Veröffentlichungstag der Anmeldung: 02.09.1998
(73) Patentinhaber: Tesa AG, 20253 Hamburg (DE)
(72) Erfinder: Schümann, Uwe, Dr., 25421 Pinneberg (DE); Seitz, Karsten, Dr., 21614 Buxtehude (DE)

(56) Entgegenhaltungen:
- FR-A- 1 504 148
- US-A- 3 499 853
- US-A- 4 461 795

## Beschreibung

Die Erfindung betrifft einen Primer, mit dem die dauerhafte Verbundfestigkeit von Verklebungen auf Gummiartikeln, insbesondere auf den Seitenwänden von Fahrzeugreifen, verbessert wird, und der gleichzeitig vor migrierenden Bestandteilen schützt.

Verklebungen auf Gummioberflächen, insbesondere Autoreifen, sind in verschiedenen Ausführungsformen Stand der Technik. Beispielhaft seien hier die sogenannten "Weißwandreifen" genannt. Fast allen Techniken zur Herstellung dieser Reifen ist gemeinsam, daß ein dauerhafter Verbund zwischen dem Reifen und dem Farbband, beziehungsweise allgemein der Markierung, durch eine Zusammenvulkanisation erreicht wird, d.h., daß der Reifen und die Markierung unter Aufwendung von Druck und Hitze für eine bestimmte Zeit zusammengeführt werden, also miteinander chemisch zur Reaktion gebracht werden.
Die Dauer der Druck- und Hitzeeinwirkung richtet sich nach dem eingesetzten Vulkanisationssystem. In jedem Fall sind bei Fahrzeugreifen einige Minuten vonnöten.

US 4,461,795 beschreibt eine mehrschichtige Farbmarkierung, die nicht durch Vulkanisation, sondern im Heißlaminierverfahren auf Reifenoberflächen geklebt werden kann. Die drei wesentlichen Schichten sind die Schmelzklebstoffschicht aus einem thermoplastischen Polyester oder thermoplastischen Polyurethan, die Antimigrationssperrschicht aus Nylon oder PVDC und die Farbschicht auf Basis Polychloropren und chlorsulfoniertem Polyethylen. Obwohl das beschriebene Dreischichtsystem unzweifelhaft die Vorteile bietet, daß ein Verbund zur Reifenoberfläche in wenigen Sekunden statt in Minuten hergestellt ist, und eine Verfärbung durch migrierende Alterungsschutzmittel nicht oder nur in geringem Maße stattfindet, hat es auch einige Nachteile.

So hat sich in eigenen Versuchsreihen gezeigt, daß eine gute Verbundfestigkeit zwar auf Altreifen erreicht wird, nicht aber auf PKW-Neureifen.
Für die Untersuchungen wurden dabei folgende Neureifenmarken herangezogen:
Dunlop SP 65 185/65 R14, Uniroyal rallye 380/65 185/65 R14 86T, Winston Value Plus 185/70 HR15 88H und Fulda 195/70 R14 91T.

Außerdem ist in US 4,461,795 die chemische Vernetzung und damit die Lösungsmittelbeständigkeit der Farbschicht nur über eine Vulkanisation (30 min bei 155 °C) zu erreichen, was für die Herstellung von Ballenware unpraktikabel ist.

Aufgabe der Erfindung war es, einen Primer zur Verfügung zu stellen, der Verkleburigen auf Gummiartikeln verbessert und gleichzeitig vor aus dem Gummi migrierenden Bestandteilen schützt.

Gelöst wurde die Aufgabe durch den im folgenden beschriebenen Primer. Gegenstand der Unteransprüche sind dabei vorteilhafte Weiterbildungen des Primers.

Demgemäß setzt sich Primer aus einer verdünnten Lösung eines thermoplastischen Polyamids auf Basis von dimerisierten Fettsäuren und Diaminen zusammen.

Der Primer ist vorzugsweise eine 1 %ige bis 10 %ige Lösung eines thermoplastischen Polyamids.

Bevorzugt ist ein Lösungsmittelgemisch aus Benzin und Ethanol,

Besonders vorteilhaft ist die Verwendung des Primers in Verbindung mit einem Farbband, das auf Gummioberflächen, besonders Autoreifen, verklebt wird, wobei das Farbband den folgenden Aufbau aufweist:
a) eine Farbschicht aus einem 2-Komponenten-Polyurethanfarblack, die vorzugsweise eine Dicke von 10 µm bis 500 µm, insbesondere 40 µm bis 100 µm, aufweist,
b) gegebenenfalls eine Sperrschicht.
c) eine Klebstoffschicht.

Auf der außen liegenden Seite der Farbschicht ist in einer bevorzugten Ausführungsform des Farbbands ein Laminierhilfsstreifen aufgebracht ist.
Die Klebstoffschicht kann ein thermoplastisches Polyamidharz sein und eine Dicke von 10 µm bis 500 µm, insbesondere 20 µm bis 100 µm, aufweisen.
Die Sperrschicht kann ein Polyamid oder ein Polyvinylidendichlorid sein und eine Dicke von 1 µm bis 20 µm, insbesondere 2 µm bis 5 µm, aufweisen.
Der Laminierhilsstreifen kann ein mit einem thermisch aktivierbaren, antiadhäsiven Wachs beschichtetes Papier sein.

Der Primer dient dazu, die Verbundfestigkeit von Verklebungen auf Gummioberflächen und die Langzeitbeständigkeit der Verklebungen zu verbessern.

Der erfindungsgemäße Primer zeigt bei seiner Anwendung hervorragende Produkteigenschaften, die auch für den Fachmann derartig nicht vorherzusehen waren.

Beispielhaft sei die Anwendung in Verbindung mit einem Farbband beschrieben, mittels eines von der Firma Stahlgruber Otto Gruber GmbH & Co zum Patent angemeldeten (Veröffentlichungsnummer DE 38 15 542 A1) und hergestellten Applikationsgerätes auf bereits vulkanisierte Autoreifen heiß auflaminiert wird. Für die Auflaminierung des Reifens muß dieser nicht einmal von der Felge abmontiert werden.

Die einzuhaltenden Laminierbedingungen lassen sich wie folgt charakterisieren:
- Temperatur : maximal 200 °C,
   ansonsten frei wählbar
- Druck : maximal 10 bar
   ansonsten frei wählbar
- Kontaktzeit : ungefähr 2 bis 3 Sekunden

Diese Bedingungen unterscheiden sich drastisch von den bei der Reifenfertigung üblichen Vulkanisationsbedingungen, bei denen insbesondere eine längere Reaktionszeit zur Verfügung steht.

Das zum Vergeben verwendete Farbband besteht dabei aus einer Farbschicht aus einem 2-Komponenten-Polyurethanfarblack und einer Klebstoffschicht, wobei zwischen Farbschicht und Klebstoffschicht eine Sperrschicht aus Polyamid vorhanden ist. Des weiteren ist auf der außen liegenden Seite der Farbschicht ein Laminierhilfsstreifen aufgebracht ist, und zwar ein mit einem thermisch aktivierbaren, antiadhäsiven Wachs beschichtetes Papier.

Aufgrund des Schutzes durch den Laminierhilfsstreifen übersteht das Farbband die Druckreibungsbeanspruchung durch den heißen Stempel selbst an erhabenen Stellen (Ziffern, Buchstaben, Zeichen etc.) schadlos. Die thermisch aktivierbare Wachsbeschichtung des Papiers sorgt dafür, daß im Moment der Laminierung eine Trennung zwischen Farbband und Papierstreifen stattfindet, so daß der Papierstreifen gemäß der Konstruktion des Applikationsgerätes abgeführt werden kann. Das Farbband haftet sofort am Reifen. Die durch die Auswahl der eingesetzten Komponenten in dem Aufbau gemäß obiger Beschreibung bedingte Flexibilität, d.h. Dehnbarkeit, des Bandes sorgt dafür, daß das Band ohne einzureißen und ohne Falten zu bilden sich der Kreisform des Reifens anpaßt. Das Band schmiegt sich auch an erhabene Stellen des Reifens glatt an.

Die Beständigkeit des auf den Reifen geklebten Farbbandes gegenüber Ablösung oder Rißbildung im späteren Fahrbetrieb, d.h., die Widerstandsfähigkeit gegenüber der Walkbeanspruchung, wird durch eine Vorbehandlung der Reifenseitenfläche mit dem erfindungsgemäßen Primer erheblich verbessert. Es genügt ein dünner Pinselstrich auf die zuvor gut gereinigte Reifenseitenfläche.

Im Reifenprüfstandlauf kam es ohne Primer meist schon nach 5000 km zu Rißbildungen und Ablösungen, mit Primer wurden Rißbildungen und Ablösungen auch nach 60000 km nicht beobachtet. Überraschenderweise wurde im Reifenprüfstandtest gefunden, daß auch die Beständigkeit der Farbe des Streifens durch den Primer erheblich verbessert wird.

Ohne Schutzmaßnahmen wäre die Farbschicht bereits nach kurzer Zeit durch die in jedem Reifen enthaltenen, stark migrierenden und verfärbenden Alterungsschutzmittel unansehnlich. Eine Maßnahme ist daher der Einbau einer Sperrschicht in das Farbband. Es stellte sich nun heraus, daß die Sperrschicht allein nicht ausreicht. Erst in Verbindung mit dem Primer, der für sich allein keine signifikante Sperrwirkung hat, wird eine befriedigende Farbechtheit erhalten. Es wird angenommen, daß die Sperrschicht ohne Primer durch die Walkarbeit des Reifens nach und nach perforiert wird, obwohl die Sperrschicht in einer Schichtdicke von 2 µm bis 5 µm durchaus flexibel ist. Der Primer stellt offensichtlich einen mechanischen Puffer dar und fängt die an der Sperrschicht angreifenden Kräfte weitgehend ab.

Dadurch, daß das Farbband nicht auf den Reifen vulkanisiert wird, sondern durch Schmelzklebung am Reifen zur Haftung gebracht wird, ist es von diesem auch wieder schadlos entfembar, indem es zum Beispiel mit einem Heißluftfön über den Schmelzpunkt des Klebers erwärmt wird und dann einfach abgezogen wird.

Neben der besonders bevorzugten Verwendung des Primers zum Verkleben von Artikeln auf Reifen ist aber auch die Benutzung in Verbindung mit anderen Gummiteilen möglich.

Im folgenden soll die Erfindung anhand eines Ausführungsbeispiels näher erläutert werden, ohne die Erfindung damit einschränken zu wollen.

### Beispiele

In Tabelle 1 sind, mit Ausnahme der Lösungsmittel, alle zur Herstellung einer bevorzugten Ausführungsform des Farbbandes und des Primers verwendeten Materialien aufgeführt, und zwar jeweils mit Handelsnamen und Hersteller. Die genannten Materialien sind alle frei im Handel erhältlich.

**Tablelle 1:**

| Zur Herstellung des Farbbandes und des Primers eingesetzte Materialien mit Handelsname und Hersteller | | |
|---|---|---|
| Handelsname | Beschreibung | Hersteller |
| Euremelt 2140 ® | Polyamid-Schmelzklebstoff (Polykondensationsprodukt aus dimerisierten Fettsäuren und Diaminen) | Witco |
| Ultramid 1C ® | Polyamid | BASF |
| PUR-Farbe für Kunststoff FX 80-0617 ® | Farblack | BASF Lacke & Farben AG |
| PUR-Zusatzlack SC 29-0113 ® | Isocyanat-Härter | BASF Lacke & Farben AG |
| Dow Coming 282 ® | Silikon-Haftklebstoff | Dow Coming |
| Metapapier SB 342 ® | Wachspapier | Hoffmann & Engelmann |

In Tabelle 2 wird die Erfindung an drei Beispielen verdeutlicht:

**Tablelle 2**

| Beispiele für den Produktaufbau des Farbbandes (ohne Laminierhilfsstreifen) | | | |
|---|---|---|---|
| | Beispiel 1 | Beispiel 2 | Beispiel 3 |
| Klebstoffschicht | Euremelt 2140 ® | Euremelt 2140 ® | Euremelt 2140 ® |
| Auftragsstärke | 30 g/m² | 40 g/m² | 60 g/m² |
| Sperrschicht | Ultramid 1C ® | Ultramid 1C ® | Ultramid 1C ® |
| Auftragsstärke | 3 g/m² | 3 g/m² | 3 g/m² |
| Farbschicht | FX 80-0617 ® | FX 80-0617 ® | FX 80-0617 ® |
| Verhältnis Farbe:Härter | 85:15 | 85:15 | 87:13 |
| Auftragsstärke | 80 g/m² | 60 g/m² | 60 g/m² |
| Gesamtdicke | 110 µm | 100 µm | 120 µm |
| Reißkraft* | 5.4 N/cm | 6,2 N/cm | 4,9 N/cm |
| Reißdehnung* | 180 % | 190 % | 210 % |

| | | | |
|---|---|---|---|
| * Parameter der Reißdehnungsmessungen: Länge der Streifen: 5 cm Breite der Streifen: 1,5 cm Reißgeschwindigkeit: 100 mm / min Temperatur: 23 °C | | | |

Euremelt 2140 ® wurde in den angegebenen Auftragsstärken im Extrusionsverfahren auf handelsübliches Trennpapier aufgetragen. Ultramid 1C ® wurde aus einer 10 %igen Lösung (in Ethanol / Wasser 85:15) auf die Euremelt-Schicht gestrichen. Darauf wurde die Farbschicht, deren Topfzeit ca. 2,5 h betrug, in den angegebenen Verhältnissen Farblack:Härter aufgetragen und im Trockenkanal bei 120 °C gehärtet. In allen Beispielen wurde auf die Farbschicht noch der Silikonhaftkleber Dow Coming 282 ® in einer Auftragsstärke von 2,5 µm gestrichen. Sodann wurde das Metapapier SB 342 ® zukaschiert und das Trennpapier ausgedeckt.

Der Primer wurde in den Beispielen hergestellt, indem Euremelt 2140 ® durch Rühren in einer Konzentration von 4 % in einem Ethanol / Benzin - Gemisch (50:50) gelöst wurde.

Die Applikation am Reifen erfolgte in den Beispielen in folgender Weise:
Die Reifenseitenwand wurde zunächst mit einer Reinigerlösung, zum Beispiel mit einem Spezialreiniger von der Firma Stahlgruber Otto Gruber GmbH & Co ("TipTop-Spezialreiniger" ®), gründlich gesäubert. Sodann wurde im Pinsel- oder Lappenauftragsverfahren der Primer in einer Schichtdicke von ca. 7 g/m² aufgetragen. Dazu wurde die Reifenseitenwand einmal mit der Prirnerlösung benetzt. Sodann erfolgte das Aufbringen des Farbbandes mit dem Applikationsgerät der Firma Stahlgruber.

Die Einstellungen am Gerät wurden in den Beispielen folgendermaßen gewählt:

| | |
|---|---|
| Temperatureinstellung | 155 °C |
| Betriebsdruck | 5 bar |

Die fertigen Reifen wurden einem Reifenprüfstanddauerlauf unterzogen.
Die Bedingungen waren:

| | |
|---|---|
| Geschwindigkeit | 120 km/h |
| Last | 400 kg |
| Dauer | 470 h |
| | entspricht 56400 km. |

Es zeigte sich, daß es keine Ablösungen oder Einrisse des Farbbandes gab. Es trat nur eine leichte Oberflächenverfärbung auf, die abwaschbar war. Zum Vergleich ohne Primer aufgebrachte Streifen lösten sich dagegen schon nach wenigen Stunden Prüfstandlauf teilweise ab und zeigten erheblich stärkere Verfärbungen.

## Patentansprüche

1. Primer zum Verbessern der dauerhaften Verbundfestigkeit von Verklebungen auf Gummiartikeln, bestehend aus einer verdünnten Lösung eines thermoplastischen Polyamids auf Basis von dimerisierten Fettsäuren und Diaminen.

2. Primer nach Anspruch 1, **dadurch gekennzeichnet, daß** die verdünnte Lösung eine 1 %ige bis 10 %ige Lösung eines thermoplastischen Polyamids ist.

3. Primer nach einem der Ansprüche 1 oder 2, **dadurch gekennzeichnet, daß** das Lösungsmittelgemisch zur Lösung aus Benzin und Ethanol besteht.

4. Verwendung des Primers gemäß einem der Ansprüche 1 bis 3 zum Verkleben eines Farbbands auf Gummioberflächen, besonders Autoreifen, **dadurch gekennzeichnet, daß** das Farbband den folgenden Aufbau aufweist:
a) eine Farbschicht aus einem 2-Komponenten-Polyurethanfarblack,
b) gegebenenfalls eine Sperrschicht,
c) eine Klebstoffschicht.

5. Verwendung des Primers nach Anspruch 4, **dadurch gekennzeichnet, daß** auf der außen liegenden Seite der Farbschicht ein Laminierhilfsstreifen aufgebracht ist.

6. Verwendung des Primers nach den Ansprüchen 4 oder 5, **dadurch gekennzeichnet, daß**, die Farbschicht des Farbbands eine Dicke von 10 µm bis 500 µm, insbesondere 40 µm bis 100 µm, aufweist.

7. Verwendung des Primers nach den Ansprüchen 4 bis 6, **dadurch gekennzeichnet, daß** die Klebstoffschicht ein thermoplastisches Polyamidharz, insbesondere das Polykondensationsprodukt aus dimerisierten Fettsäuren mit Diaminen, ist und eine Dicke von 10 µm bis 500 µm, insbesondere 20 µm bis 100 µm, aufweist.

8. Verwendung des Primers nach den Ansprüchen 4 bis 7, **dadurch gekennzeichnet, daß** die Sperrschicht ein Polyamid oder ein Polyvinylidendichlorid ist und eine Dicke von 1 µm bis 20 µm, insbesondere 2 µm bis 5 µm, aufweist.

9. Verwendung des Primers nach den Ansprüchen 4 bis 8, **dadurch gekennzeichnet, daß** der Laminierhilsstreifen ein mit einem thermisch aktivierbaren, antiadhäsiven Wachs beschichtetes Papier ist.

## Claims

1. Primer for enhancing the permanent bond strength of adhesive bonds on rubber articles, composed of a dilute solution of a thermoplastic polyamide based on dimerized fatty acids and diamines.

2. Primer according to Claim 1, **characterized in that** the dilute solution is a 1% strength to 10% strength solution of a thermoplastic polyamide.

3. Primer according to one of Claims 1 or 2, **characterized in that** the solvent mixture for the solution is composed of petroleum spirit and ethanol.

4. Use of the primer according to one of Claims 1 to 3 for adhesively bonding a paint tape to rubber surfaces, especially car tyres, **characterized in that** the paint tape has the following structure:
a) a colour layer comprising 2-component polyurethane paint,
b) if desired, a barrier layer,
c) an adhesive layer.

5. Use of the primer according to Claim 4, **characterized in that** a laminating assistance strip has been applied to the outer side of the colour layer.

6. Use of the primer according to Claims 4 or 5, **characterized in that** the colour layer of the paint tape has a thickness of from 10 µm to 500 µm, in particular from 40 µm to 100 µm.

7. Use of the primer according to Claims 4 to 6, **characterized in that** the adhesive layer is a thermoplastic polyamide resin, in particular the polycondensation product of dimerized fatty acids with diamines, and has a thickness of from 10 µm to 500 µm, in particular from 20 µm to 100 µm.

8. Use of the primer according to Claims 4 to 7, **characterized in that** the barrier layer is a polyamide or a polyvinylidene dichloride and has a thickness of from 1 µm to 20 µm, in particular from 2 µm to 5 µm.

9. Use of the primer according to Claims 4 to 8, **characterized in that** the laminating assistance strip is a paper coated with a heat-activatable, anti-adhesive wax.

## Revendications

1. Matériau de fond en vue d'améliorer la durabilité de l'adhérence de collages sur des objets en caoutchouc, constitué d'une solution diluée d'un polyamide thermoplastique à base d'acides gras dimérisés et de diamines.

2. Matériau de fond selon la revendication 1, **caractérisé en ce que** la solution diluée est une solution de 1% à 10% d'un polyamide thermoplastique.

3. Matériau de fond selon l'une des revendications 1 ou 2, **caractérisé en ce que** le mélange de solvant utilisé pour la solution est constitué d'essence et d'éthanol.

4. Utilisation du matériau de fond selon l'une des revendications 1 à 3, pour le collage d'une bande colorée sur des surfaces de caoutchouc, en particulier des pneus d'automobiles, **caractérisée en ce que** la bande colorée présente la structure suivante :
a) une couche colorée constituée d'un vernis coloré en polyuréthanne à deux composants,
b) le cas échéant, une couche de barrière et
c) une couche d'adhésif.

5. Utilisation du matériau de fond selon la revendication 4, **caractérisée en ce qu'**une bande auxiliaire de stratification est appliquée sur le côté de la couche colorée situé à l'extérieur.

6. Utilisation du matériau de fond selon les revendications 4 ou 5, **caractérisée en ce que** la couche colorée de la bande colorée présente une épaisseur de 10 µm à 500 µm et en particulier de 40 µm à 100 µm.

7. Utilisation du matériau de fond selon les revendications 4 à 6, **caractérisée en ce que** la couche d'adhésif est une résine de polyamide thermoplastique, en particulier le produit de polycondensation d'acides gras dimérisés avec des diamines, et **en ce qu'**elle présente une épaisseur de 10 µm à 500 µm et en particulier de 20 µm à 100 µm.

8. Utilisation du matériau de fond selon les revendications 4 à 7, **caractérisée en ce que** la couche de barrière est un polyamide ou un poly(dichlorure de vinylidène) et présente une épaisseur de 1 µm à 20 µm et en particulier de 2 µm à 5 µm.

9. Utilisation du matériau de fond selon les revendications 4 à 8, **caractérisée en ce que** la bande auxiliaire de stratification est un papier revêtu d'une cire anti-adhésive activable thermiquement.
